(19) **Europäisches Patentamt / European Patent Office / Office européen des brevets**

(11) **EP 2 856 391 B1**

(12) **FASCICULE DE BREVET EUROPEEN**

(45) Date de publication et mention de la délivrance du brevet:
**27.03.2019 Bulletin 2019/13**

(21) Numéro de dépôt: **13724264.0**

(22) Date de dépôt: **22.05.2013**

(51) Int Cl.:
**G06K 9/46** *(2006.01)*

(86) Numéro de dépôt international:
**PCT/EP2013/060443**

(87) Numéro de publication internationale:
**WO 2013/178510 (05.12.2013 Gazette 2013/49)**

(54) **PROCÉDÉ DE DÉTECTION D'OMBRES PORTÉES SUR UNE IMAGE INITIALE**

VERFAHREN ZUR ERKENNUNG VON FALLENDEN SCHATTEN AUF EINEM ANFÄNGLICHEN BILD

METHOD FOR DETECTING DROP SHADOWS ON AN INITIAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2012 FR 1255018**

(43) Date de publication de la demande:
**08.04.2015 Bulletin 2015/15**

(73) Titulaire: **Idemia Identity & Security France 92400 Courbevoie (FR)**

(72) Inventeur: **ESCAMILLA, Pierre 92130 Issy Les Moulineaux (FR)**

(74) Mandataire: **Cabinet Le Guen Maillet 3, impasse de la Vigie CS 71840 35418 Saint-Malo Cedex (FR)**

(56) Documents cités:
**US-A1- 2010 232 705**

- **Nicolas Morizet: "Revue des algorihmes PCA, LDA et EBGM utilisés en reconnaissance 2D du visage pour la biométrie", , 24 novembre 2006 (2006-11-24), XP055056766, Extrait de l'Internet: URL:http://www.dreamlabs.eu/nmorizet/docs/ Revue des Algorithmes PCA, LDA et EBGM utilisés en reconnaissance 2D du visage pour la biométrie (MajecSCTIC 2006).pdf [extrait le 2013-03-15]**

**Description**

La présente invention concerne un procédé de détection d'ombres sur une image, en particulier sur une image d'une face d'un individu, ainsi qu'un dispositif de détection adapté à mettre en oeuvre un tel procédé. Elle trouve application dans le domaine de la reconnaissance biométrique et en particulier dans le domaine de l'identification par analyse faciale d'un individu.

L'identification par reconnaissance faciale est utilisée pour sécuriser des installations comme, par exemple, des bâtiments ou des machines, ou pour obtenir la délivrance de droits, comme par exemple, la délivrance d'une carte d'identité, le versement d'une pension, etc. Cette technologie permet de s'affranchir de codes d'accès ou de cartes qui peuvent être volés ou falsifiés. L'utilisation de cette technologie permet de renforcer la sécurité dans la mesure où la probabilité que deux personnes aient deux faces identiques est faible.

On connaît un procédé d'identification d'un individu par analyse faciale qui comporte une étape de capture d'une image de la face dudit individu, une étape de traitement des ombres portées sur l'image ainsi capturée, et une étape de comparaison de l'image ainsi traitée avec des images de référence stockées dans une base de données.

L'étape de traitement des ombres portées est réalisée par un logiciel de traitement des ombres portées qui effectue différents traitements tendant à faire disparaître les ombres qui sont portées sur l'image capturée par les parties corporelles de l'individu lui-même ou par des objets extérieurs audit individu.

Les traitements qui sont actuellement mis en oeuvre pour réduire les ombres ne donnent pas entière satisfaction car ils traitent toutes les images mêmes celles qui n'ont pas d'ombre portée.

Un objet de la présente invention est de proposer un procédé de détection d'ombres sur une image qui permet lorsqu'il est appliqué à une image de détecter si cette image comporte des ombres portées et si elle doit être traitée afin de réduire les ombres.

A cet effet, est proposé un procédé de détection d'ombres portées sur une image de taille '0', ledit procédé comportant:

- une étape de capture au cours de laquelle un dispositif d'acquisition capture et éventuellement redimensionne l'image de taille '0' de la face d'un individu pour que l'image de taille '0' présente une définition de n*n où $n = 2^N$ et où N est un entier naturel supérieur ou égal à 2,
  pour 'p' variant de 0 à N-1
- une étape de découpage (304) au cours de laquelle l'image de taille 'p' (100, 200) est découpée en $n_p*n_p$ pixels où $n_p = 2^{(N-p)}$,
- une première étape de normalisation (306) de l'image de taille 'p' (100, 200), au cours de laquelle la valeur $X_{ij}^p$ de chaque pixel de l'image de taille 'p' (100, 200) est normalisée sous la forme d'une valeur $x_{ij}^p = \dfrac{X_{ij}^p}{\sqrt{\sum\limits_{i=1}^{n}\sum\limits_{j=1}^{n}(X_{ij}^p)^2}}$ ,

- une étape de calcul (308) au cours de laquelle la variance $\sigma_p$ de l'image de taille 'p' est calculée,
- une étape de réduction (310) au cours de laquelle la résolution de l'image de taille 'p' est réduite par un facteur 2 en une image de taille 'p+1', où les valeurs $X_{ij}^{p+1}$ des pixels de l'image de taille 'p+1' (200) sont calculées par rapport aux valeurs normalisées $x_{ij}^p$ des pixels de l'image de taille 'p',
- une étape d'incrémentation (312) au cours de laquelle l'indice 'p' est incrémenté de 1,
- une étape de test (313) au cours de laquelle la valeur de l'indice 'p' est comparée à N,
- si le résultat de l'étape de test est négatif, une étape de bouclage (314) au cours de laquelle le procédé de détection boucle sur l'étape de découpage (304),
- une deuxième étape de normalisation (316) au cours de laquelle la variance $\sigma_p$ de chaque image réduite de taille 'p' où p varie de 1 à N-1 est divisée par la variance $\sigma_0$ de l'image de taille '0',
- une étape de vectorisation (318), au cours de laquelle un vecteur de caractéristiques est construit à partir de l'ensemble des variances ainsi normalisées $\dfrac{\sigma_1}{\sigma_0}, \dfrac{\sigma_2}{\sigma_0}, \dots \dfrac{\sigma_{N-1}}{\sigma_0}$ ,
- une étape de multiplication (320) au cours de laquelle est calculé le produit scalaire du vecteur de caractéristiques et du vecteur propre prédéterminé et issu de la LDA,
- une étape de comparaison (322) au cours de laquelle le produit scalaire ainsi calculé est comparé à une valeur seuil de référence, et
- une étape de classification (324) au cours de laquelle l'image de taille '0' (100) est classée dans la classe "ombres portées" si le score est supérieur à la valeur seuil de référence, et n'est pas classée dans la classe "ombres portées" si le score est inférieur à la valeur seuil de référence.

Avantageusement, la valeur $X_{ij}^{p+1}$ de chaque pixel est une somme des valeurs normalisées $x_{ij}^{p}$ des quatre pixels correspondants de l'image de taille 'p' et donnée par la formule: $X_{ij}^{p+1} = \sum_{k=0}^{1} \sum_{l=0}^{1} x_{i+k,j+l}^{p}$ $(2)$.

L'invention propose également un dispositif de détection (400) adapté à mettre en oeuvre le procédé de l'une des variantes précédentes, ledit dispositif de détection (400) comportant:

- un dispositif d'acquisition (402) destiné à capturer et éventuellement à redimensionner une image de taille '0' (100) de la face d'un individu pour que l'image de taille '0' présente une définition de n*n où $n = 2^N$ et où N est un entier naturel supérieur ou égal à 2,
- des moyens de découpage (404) destinés à découper une image de taille 'p' (100, 200) en $n_p \cdot n_p$ pixels où $n_p = 2^{(N-p)}$,
- des premiers moyens de normalisation (406) destinés à normaliser la valeur $\cdot X_{ij}^{p}$ de chaque pixel de l'image de taille 'p' (100, 200) sous la forme d'une valeur $x_{ij}^{p} = \dfrac{X_{ij}^{p}}{\sqrt{\sum_{i=1}^{n} \sum_{j=1}^{n} (X_{ij}^{p})^2}}$,
- des moyens de calcul (408) destinés à calculer la variance $\sigma_p$ de l'image de taille 'p',
- des moyens de réduction (410) destinés à créer une image de taille 'p+1' par réduction de la résolution de l'image de taille 'p' par un facteur 2, où les valeurs $X_{ij}^{p+1}$ des pixels de l'image de taille 'p+1' (200) sont calculées par rapport aux valeurs normalisées $x_{ij}^{p}$ des pixels de l'image de taille 'p',
- des moyens d'incrémentation (412) destinés à incrémenter de 1 l'indice 'p',
- des moyens de test (414) destinés à tester la valeur de l'indice 'p' par rapport à N,
- des deuxièmes moyens (416) de normalisation destinés à diviser la variance $\sigma_p$ de chaque image réduite de taille 'p' où p varie de 1 à N-1 par la variance $\sigma_0$ de l'image de taille '0',
- des moyens de vectorisation (418) destinés à construire un vecteur de caractéristiques à partir de l'ensemble des variances normalisées $\dfrac{\sigma_1}{\sigma_0}$, $\dfrac{\sigma_2}{\sigma_0}$, $\dfrac{\sigma_{N-1}}{\sigma_0}$,
- des moyens de multiplication (420) destinés à calculer le produit scalaire du vecteur de caractéristiques et du vecteur propre prédéterminé et issu de la LDA,
- des moyens de comparaison (422) destinés à comparer le produit scalaire à une valeur seuil de référence, et
- des moyens de classification (424) destinés à classer l'image de taille '0' (100) dans la classe "ombres portées" si le score est supérieur à la valeur seuil de référence, et à ne pas classer l'image de taille '0' (100) dans la classe "ombres portées" si le score est inférieur à la valeur seuil de référence.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente une image d'une face d'un individu à un premier stade d'un procédé de détection d'ombres selon l'invention,
la Fig. 2 représente l'image de la Fig. 1 à un stade ultérieur du procédé de détection d'ombres selon l'invention,
la Fig. 3 est un algorithme d'un procédé de détection selon l'invention, et
la Fig. 4 montre un dispositif de détection selon l'invention.

L'invention qui va être décrite ci-après est plus spécifiquement orientée sur la détection d'ombres sur une image d'une face d'un individu, mais elle s'applique de la même manière si l'image représente uniquement une partie de ladite face, comme par exemple une zone périphérique d'un oeil.

Les ombres portées sont des détails d'échelle et non de fréquence, elles sont localisées spatialement et présentent une taille importante dans les cas les plus gênants, et elles se caractérisent par l'apparition d'un saut brutal dans l'image et donc une forte variation dans l'image.

On cherche à caractériser la variation spatiale en fonction d'une échelle sur une image capturée.

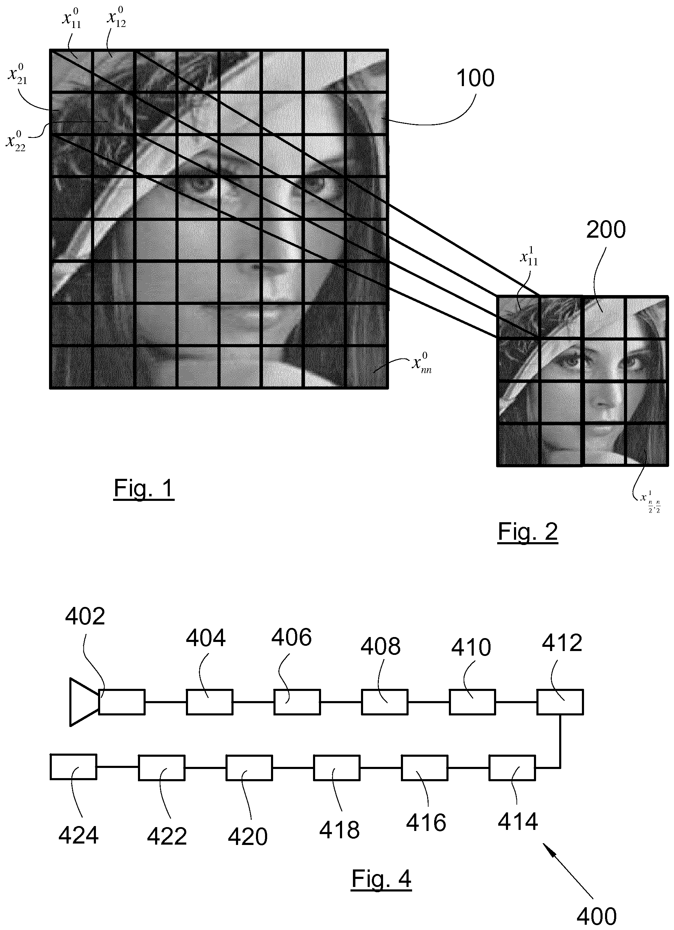

La Fig. 1 montre une image initiale 100 d'une face d'un individu capturée par un dispositif d'acquisition adapté (402, Fig. 4), tel qu'un capteur CCD, et éventuellement redimensionnée pour pouvoir être découpée en n*n pixels où n s'écrit $2^N$ et où N est un entier naturel strictement supérieur à 1.

L'image initiale 100 est dite image de taille '0'.

Dans le cas d'une image initiale 100 en niveau de gris, la valeur $X_{ij}^0$ de chaque pixel varie entre 0 et 255.

Pour s'affranchir des variations de luminosité d'une image initiale 100 à une autre, la valeur $X_{ij}^0$ de chaque pixel de l'image initiale 100 est normalisée canoniquement de 0 à 1 sous la forme d'une valeur normalisée $x_{ij}^0$ où i est le numéro de la ligne et où j est le numéro de la colonne du pixel considéré.

Dans le mode de réalisation de l'invention présenté ici, la normalisation s'effectue sur la base de la norme dite L2 et est représentée par la formule:

$$x_{ij}^0 = \frac{X_{ij}^0}{\sqrt{\sum_{i=1}^{n}\sum_{j=1}^{n}(X_{ij}^0)^2}} \qquad (0).$$

Selon d'autre modes de réalisation, il est possible d'utiliser une normalisation différente comme par exemple la norme dite L1 ou la norme dite L infini.

La variance initiale $\sigma_0$ de l'image initiale 100 est calculée à partir des valeurs normalisées $x_{ij}^1$ des pixels de l'image initiale 100 par la formule:

$$\sigma_0 = \sum_{i=1}^{n}\sum_{j=1}^{n}(x_{ij}^0 - m)^2 \text{ , où } m = \frac{1}{n*n}\sum_{i=1}^{n}\sum_{j=1}^{n}x_{ij}^0 \qquad (1).$$

La Fig. 2 montre une image 200 dont la résolution a été réduite de 2 par rapport à l'image initiale 100. L'image réduite 200 est ainsi découpée en $\frac{n}{2}*\frac{n}{2}$ pixels.

L'image réduite 200 est dite de taille '1' car elle est issue d'une réduction par 2 de la résolution de l'image de taille '0'. D'une manière générale, une image de taille 'p' est issue d'une réduction de la résolution par deux de l'image de taille 'p-1'. Le nombre 'p' varie de 0 à N-1.

L'image de taille 'p' est découpée en $n_p*n_p$ pixels où $n_p = 2^{(N-p)}$.

Pour l'image de taille 'p', la valeur de chaque pixel est notée $X_{ij}^p$ , , où i est le numéro de la ligne et où j est le numéro de la colonne du pixel considéré.

Chaque groupe de quatre pixels de l'image de taille 'p-1' (100) est regroupé pour donner un pixel de l'image de taille 'p' (200) et dans laquelle la valeur $X_{ij}^p$ de chaque pixel est une somme des valeurs normalisées $x_{ij}^{p-1}$ des quatre pixels correspondants de l'image de taille 'p-1' (100) et donnée par la formule:

$$X_{ij}^p = \sum_{k=0}^{1}\sum_{l=0}^{1}x_{i+k,j+l}^{p-1} \qquad (2).$$

Chaque valeur $X_{ij}^p$ de l'image de taille 'p' (200) est ensuite normalisée selon une formule similaire à la formule (0) et la valeur normalisée de chaque pixel de l'image de taille 'p' (200) est notée $x_{ij}^p$ et est donnée, dans le cas de la norme L2, par la formule:

$$x_{ij}^p = \frac{X_{ij}^p}{\sqrt{\sum_{i=1}^{n}\sum_{j=1}^{n}(X_{ij}^p)^2}} \qquad (3).$$

La variance $\sigma_p$ de l'image de taille 'p' (200) est calculée par la formule:

$$\sigma_p = \frac{1}{n_p(n_p-1)}\sum_{i=1}^{n_p}\sum_{j=1}^{n_p}(x_{ij}^p - m)^2 \text{ , où } m = \frac{1}{n_p * n_p}\sum_{i=1}^{n_p}\sum_{j=1}^{n_p}x_{ij}^p \qquad (4).$$

La variance de l'image de taille 'p' (200) est alors normalisée par rapport à la variance initiale $\sigma_0$ de l'image initiale 100 et ainsi $\sigma_p$ est divisée par $\sigma_0$, et la variance normalisée de l'image de taille 'p' s'écrit $\frac{\sigma_p}{\sigma_0}$ $\qquad (5).$

La résolution de l'image de taille 'p' (200) est alors réduite à son tour de 2 pour obtenir une nouvelle image de taille 'p+1' et les équations 2 à 5 sont recalculées.

Tant que le nombre de pixels de l'image réduite est supérieur ou égal à 2*2, une réduction de la résolution de l'image est opérée et de nouveaux calculs des équations 2 à 5 sont réalisés.

On obtient ainsi N variances normalisées notées : $\frac{\sigma_1}{\sigma_0}, \frac{\sigma_2}{\sigma_0}, \frac{\sigma_{N-1}}{\sigma_0}$ qui forment un vecteur de caractéristiques.

L'image initiale 100 dépend du dispositif d'acquisition 402 et des conditions ambiantes de prise de vue. Les variances $\sigma_0,...,\sigma_n$ sont donc dépendantes de ces conditions et la normalisation des variances $\sigma_1,...,\sigma_n$ par $\sigma_0$ permet de s'affranchir du dispositif d'acquisition 402 et des conditions ambiantes.

Pour mettre en oeuvre le procédé de détection, une phase d'apprentissage permet à partir d'une série d'images test d'enseigner audit procédé quelle image présente des ombres portées et quelle image n'en présente pas.

A cette fin, un classifieur linéaire dont le rôle est de classer, dans une classe parmi plusieurs, une image qui a des propriétés similaires à ladite classe est mis en place. L'utilisation du classifieur nécessite un mécanisme d'apprentissage au cours duquel la série d'images test est répartie en classes "ombres portées" ou "pas d'ombres portées".

Sur chaque image de la série d'images test est pratiquée une analyse discriminante linéaire (LDA) afin de déterminer les caractéristiques de la classe "ombres portées" et afin de prédire l'appartenance de chaque image initiale 100 capturée à la classe "ombres portées" ou non.

La mise en oeuvre de la LDA permet d'obtenir les vecteurs de la décomposition de la LDA et en particulier un vecteur propre à cette décomposition associé à la classe "ombres portées".

Pour déterminer si une image initiale 100 présente des ombres portées, on vérifie l'appartenance de cette image initiale 100 à la classe "ombres portées". A cette fin, le produit scalaire du vecteur de caractéristiques et du vecteur propre est réalisé. Le résultat de ce produit scalaire constitue un score qui peut être comparé à une valeur seuil de référence. Si le score est supérieur à la valeur seuil de référence, l'image initiale 100 est alors considérée comme présentant des ombres portées et classée dans la classe "ombres portées" appropriée, tandis que si le score est inférieur à la valeur seuil de référence, l'image initiale 100 est alors considérée comme ne présentant pas d'ombre portée et n'est pas classée dans la classe "ombres portées".

D'autres moyens de classification comme par exemple les machines à vecteurs de supports peuvent être mis en oeuvre. Ceux-ci se basent sur la notion de vecteurs de support qui représente les échantillons les plus proches appartenant à des classes distinctes. A partir de ces derniers est construit l'hyperplan séparateur qui maximise la marge. C'est la distance séparant la frontière des échantillons. Cet hyperplan va ensuite être utilisé pour déterminer l'appartenance à telle ou telle classe.

Ainsi en analysant le score, seules les images initiales 100 présentant effectivement des ombres portées seront traitées par un logiciel de traitement des ombres portées. Ce qui présente un gain en temps puisque seules les images initiales 100 présentant effectivement des ombres portées sont traitées par le logiciel de traitement des ombres portées, et en outre les images initiales 100 ne présentant pas d'ombre portée ne sont pas dégradées par le logiciel de traitement des ombres portées.

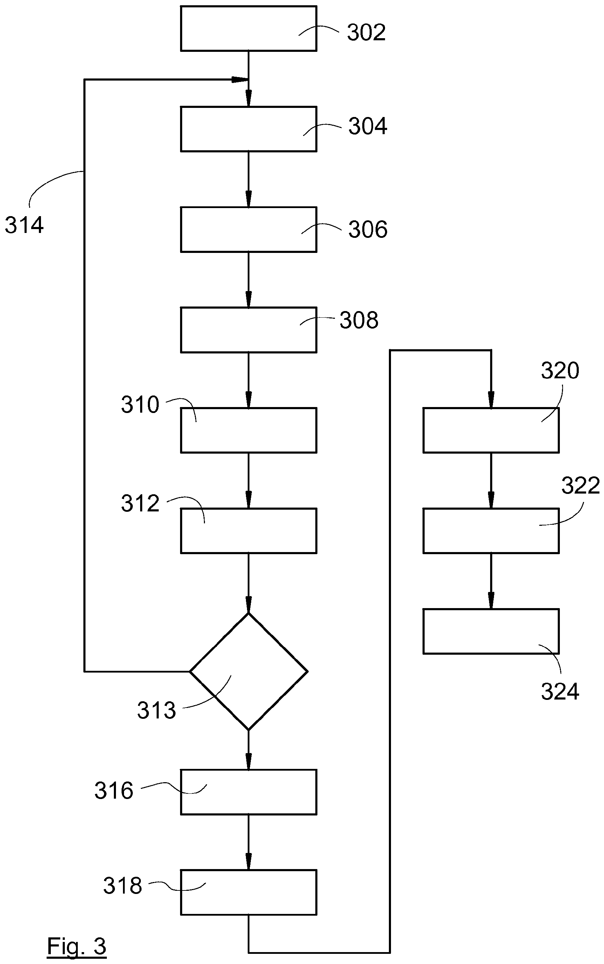

La Fig. 3 montre un algorithme d'un procédé de détection 300 d'ombres portées sur l'image de taille '0' (100) selon l'invention. Le procédé de détection 300 comporte:

- une étape de capture 302 au cours de laquelle le dispositif d'acquisition 402 capture et éventuellement redimensionne une image de taille '0' (100) de la face d'un individu pour que l'image de taille '0' présente une définition de n*n, pour 'p' variant de 0 à N-1

- une étape de découpage initial 304 au cours de laquelle l'image de taille 'p' (100, 200) est découpée en $n_p*n_p$ pixels où $n_p = 2^{(N-p)}$,

- une première étape de normalisation 306 de l'image de taille 'p' (100, 200), au cours de laquelle la valeur $X_{ij}^p$ de chaque pixel de l'image de taille 'p' (100, 200) est normalisée sous la forme d'une valeur $x_{ij}^p$, par exemple par application de l'une des normes L1, L2 ou L infini,

- une étape de calcul 308 au cours de laquelle la variance $\sigma_p$ de l'image de taille 'p' selon la formule (1) ou (4) appropriée est calculée,

- une étape de réduction 310 au cours de laquelle la résolution de l'image de taille 'p' est réduite par un facteur 2 en une image de taille 'p+1', où les valeurs $X_{ij}^{p+1}$ des pixels de l'image de taille 'p+1' (200) sont calculées par rapport aux valeurs normalisées $x_{ij}^p$ des pixels de l'image de taille 'p' à l'aide plus spécifiquement de la formule (2) qui s'écrit $X_{ij}^{p+1} = \sum_{k=0}^{1} \sum_{l=0}^{1} x_{i+k,j+l}^p$ ,

- une étape d'incrémentation 312 au cours de laquelle l'indice 'p' est incrémenté de 1,

- une étape de test 313 au cours de laquelle la valeur de l'indice 'p' est comparée à N,

- si le résultat de l'étape de test est négatif, c'est-à-dire si l'indice 'p' est différent de N, une étape de bouclage 314 au cours de laquelle le procédé de détection boucle sur l'étape de découpage 304,

- une deuxième étape de normalisation 316 au cours de laquelle la variance $\sigma_p$ de chaque image réduite de taille 'p' où p est un entier et varie de 1 à N-1 est divisée par la variance initiale $\sigma_0$ de l'image de taille '0',

- une étape de vectorisation 318, au cours de laquelle un vecteur de caractéristiques est construit à partir de l'ensemble des variances ainsi normalisées $\frac{\sigma_1}{\sigma_0}, \frac{\sigma_2}{\sigma_0}, \dots \frac{\sigma_{N-1}}{\sigma_0}$

- une étape de multiplication 320 au cours de laquelle est calculé le produit scalaire du vecteur de caractéristiques et du vecteur propre prédéterminé et issu de la LDA,

- une étape de comparaison 322 au cours de laquelle le produit scalaire ainsi calculé est comparée à une valeur seuil de référence, et

- une étape de classification 324 au cours de laquelle, l'image de taille '0' (100) est classée dans la classe "ombres portées" si le score est supérieur à la valeur seuil de référence, et n'est pas classée dans la classe "ombres portées" si le score est inférieur à la valeur seuil de référence.

Pour mettre en oeuvre le procédé 300, l'invention propose un dispositif de détection 400 qui est représenté sur la Fig. 4 et qui comporte:

- le dispositif d'acquisition 402 destiné à capturer et éventuellement à redimensionner une image de taille '0' (100) de la face d'un individu pour que l'image de taille '0' présente une définition de n*n où $n = 2^N$ et où N est un entier naturel supérieur ou égal à 2,

- des moyens de découpage 404 destinés à découper une image de taille 'p' (100, 200) en $n_p*n_p$ pixels où $n_p = 2^{(N-p)}$,

- des premiers moyens de normalisation 406 destinés à normaliser la valeur $X_{ij}^p$ de chaque pixel de l'image de taille 'p' (100, 200) sous la forme d'une valeur $x_{ij}^p = \dfrac{X_{ij}^p}{\sqrt{\sum_{i=1}^{n} \sum_{j=1}^{n} (X_{ij}^p)^2}}$ ,

- des moyens de calcul 408 destinés à calculer la variance $\sigma_p$ de l'image de taille 'p',

- des moyens de réduction 410 destinés à créer une image de taille 'p+1' par réduction de la résolution de l'image de taille 'p' par un facteur 2, où les valeurs $X_{ij}^{p+1}$ des pixels de l'image de taille 'p+1' (200) sont calculées par rapport aux valeurs normalisées $x_{ij}^p$ des pixels de l'image de taille 'p', la formule étant plus spécifiquement la formule (2) qui s'écrit $X_{ij}^{p+1} = \sum_{k=0}^{1} \sum_{l=0}^{1} x_{i+k,j+l}^p$ ,

- des moyens d'incrémentation 412 destinés à incrémenter de 1 l'indice 'p',
- des moyens de test 414 destinés à tester la valeur de l'indice 'p' par rapport à N,
- des deuxièmes moyens de normalisation 416 destinés à diviser la variance $\sigma_p$ de chaque image réduite de taille 'p' où p varie de 1 à N-1 par la variance $\sigma_0$ de l'image de taille '0',
- des moyens de vectorisation 418 destinés à construire un vecteur de caractéristiques à partir de l'ensemble des variances normalisées $\dfrac{\sigma_1}{\sigma_0}$, $\dfrac{\sigma_2}{\sigma_0}$, $\dfrac{\sigma_{N-1}}{\sigma_0}$,
- des moyens de multiplication 420 destinés à calculer le produit scalaire du vecteur de caractéristiques et du vecteur propre prédéterminé et issu de la LDA,
- des moyens de comparaison 422 destinés à comparer le produit scalaire à une valeur seuil de référence, et
- des moyens de classification 424 destinés à classer l'image de taille '0' (100) dans la classe "ombres portées" si le score est supérieur à la valeur seuil de référence, et à ne pas classer l'image de taille '0' (100) dans la classe "ombres portées" si le score est inférieur à la valeur seuil de référence.

Les moyens de découpage 404, les premiers moyens de normalisation 406, les moyens de calcul 408, les moyens de réduction 410, les moyens d'incrémentation 412, les moyens de test 414, les deuxièmes moyens de normalisation 416, les moyens de vectorisation 418, les moyens de multiplication 420, les moyens de comparaison 422, et les moyens de classification 424 sont rassemblés sous forme d'une unité de traitement prenant la forme d'un ordinateur.

Bien entendu, la présente invention n'est pas limitée aux exemples et modes de réalisation décrits et représentés, mais elle est susceptible de nombreuses variantes accessibles à l'homme de l'art.

Par exemple, dans le cadre de tels dispositifs lors de l'acquisition de plusieurs images d'une même personne, il est possible de trier les images afin de ne conserver que celles qui ne présentent pas d'ombres portées.

## Revendications

1. Procédé de détection (300) d'ombres portées sur une image de taille '0' (100), ledit procédé comportant:

   - une phase d'apprentissage au cours de laquelle chaque image d'une série d'images test subit une analyse discriminante linéaire (LDA) afin de déterminer les caractéristiques de la classe "ombres portées" et est répartie en classes "ombres portées" ou "pas d'ombres portées",
   - une étape de capture (302) au cours de laquelle un dispositif d'acquisition (402) capture et éventuellement redimensionne l'image de taille '0' (100) de la face d'un individu pour que l'image de taille '0' présente une définition de n*n où $n = 2^N$ et où N est un entier naturel supérieur ou égal à 2,
   pour 'p' variant de 0 à N-1
   - une étape de découpage (304) au cours de laquelle l'image de taille 'p' (100, 200) est découpée en $n_p * n_p$ pixels où $n_p = 2^{(N-p)}$,
   - une première étape de normalisation (306) de l'image de taille 'p' (100, 200), au cours de laquelle la valeur $X_{ij}^p$ de chaque pixel de l'image de taille 'p' (100, 200) est normalisée sous la forme d'une valeur

   $$x_{ij}^p = \frac{X_{ij}^p}{\sqrt{\sum_{i=1}^{n}\sum_{j=1}^{n}(X_{ij}^p)^2}},$$

   - une étape de calcul (308) au cours de laquelle la variance $\sigma_p$ de l'image de taille 'p' est calculée,
   - une étape de réduction (310) au cours de laquelle la résolution de l'image de taille 'p' est réduite par un facteur 2 en une image de taille 'p+1', où les valeurs $X_{ij}^{p+1}$ des pixels de l'image de taille 'p+1' (200) sont calculées par rapport aux valeurs normalisées $x_{ij}^p$ des pixels de l'image de taille 'p',
   - une étape d'incrémentation (312) au cours de laquelle l'indice 'p' est incrémenté de 1,
   - une étape de test (313) au cours de laquelle la valeur de l'indice 'p' est comparée à N,
   - si le résultat de l'étape de test est négatif, une étape de bouclage (314) au cours de laquelle le procédé de détection boucle sur l'étape de découpage (304),
   - une deuxième étape de normalisation (316) au cours de laquelle la variance $\sigma_p$ de chaque image réduite de taille 'p' où p varie de 1 à N-1 est divisée par la variance $\sigma_0$ de l'image de taille '0',

- une étape de vectorisation (318), au cours de laquelle un vecteur de caractéristiques est construit à partir de l'ensemble des variances ainsi normalisées $\frac{\sigma_1}{\sigma_0}, \frac{\sigma_2}{\sigma_0}, ... \frac{\sigma_{N-1}}{\sigma_0}$

- une étape de multiplication (320) au cours de laquelle est calculé le produit scalaire du vecteur de caractéristiques et du vecteur propre prédéterminé et issu de la LDA,
- une étape de comparaison (322) au cours de laquelle le produit scalaire ainsi calculé est comparé à une valeur seuil de référence, et
- une étape de classification (324) au cours de laquelle l'image de taille '0' (100) est classée dans la classe "ombres portées" si le score est supérieur à la valeur seuil de référence, et n'est pas classée dans la classe "ombres portées" si le score est inférieur à la valeur seuil de référence.

2.  Procédé de détection (300) selon la revendication 1, **caractérisé en ce que** la valeur $X_{ij}^{p+1}$ de chaque pixel est une somme des valeurs normalisées de des quatre pixels correspondants de l'image de taille 'p' et donnée par la formule:

$$X_{ij}^{p+1} = \sum_{k=0}^{1} \sum_{l=0}^{1} x_{i+k,j+l}^{p} \quad (2).$$

3.  Dispositif de détection (400) adapté à mettre en oeuvre le procédé de l'une des revendications 1 ou 2, ledit dispositif de détection (400) comportant:

- un mécanisme d'apprentissage prévu pour que chaque image d'une série d'images test subisse une analyse discriminante linéaire (LDA) afin de déterminer les caractéristiques de la classe "ombres portées" et soit répartie en classes "ombres portées" ou "pas d'ombres portées",
- un dispositif d'acquisition (402) destiné à capturer et éventuellement à redimensionner une image de taille '0' (100) de la face d'un individu pour que l'image de taille '0' présente une définition de n*n où $n = 2^N$ et où N est un entier naturel supérieur ou égal à 2,
- des moyens de découpage (404) destinés à découper une image de taille 'p' (100,200) en $n_p$*$n_p$ pixels où $n_p = 2^{(N-p)}$,
- des premiers moyens de normalisation (406) destinés à normaliser la valeur $X_{ij}^{p}$ de chaque pixel de l'image de taille 'p' (100, 200) sous la forme d'une valeur $x_{ij}^{p} = \dfrac{X_{ij}^{p}}{\sqrt{\sum_{i=1}^{n} \sum_{j=1}^{n} (X_{ij}^{p})^2}}$,

- des moyens de calcul (408) destinés à calculer la variance $\sigma_p$ de l'image de taille 'p',
- des moyens de réduction (410) destinés à créer une image de taille 'p+1' par réduction de la résolution de l'image de taille 'p' par un facteur 2, où les valeurs $X_{ij}^{p+1}$ des pixels de l'image de taille 'p+1' (200) sont calculées par rapport aux valeurs normalisées $x_{ij}^{p}$ des pixels de l'image de taille 'p',
- des moyens d'incrémentation (412) destinés à incrémenter de 1 l'indice 'p',
- des moyens de test (414) destinés à tester la valeur de l'indice 'p' par rapport à N,
- des deuxièmes moyens (416) de normalisation destinés à diviser la variance $\sigma_p$ de chaque image réduite de taille 'p' où p varie de 1 à N-1 par la variance $\sigma_0$ de l'image de taille '0',
- des moyens de vectorisation (418) destinés à construire un vecteur de caractéristiques à partir de l'ensemble des variances normalisées $\frac{\sigma_1}{\sigma_0}, \frac{\sigma_2}{\sigma_0}, \frac{\sigma_{N-1}}{\sigma_0}$,
- des moyens de multiplication (420) destinés à calculer le produit scalaire du vecteur de caractéristiques et du vecteur propre prédéterminé et issu de la LDA,
- des moyens de comparaison (422) destinés à comparer le produit scalaire à une valeur seuil de référence, et
- des moyens de classification (424) destinés à classer l'image de taille '0' (100) dans la classe "ombres portées" si le score est supérieur à la valeur seuil de référence, et à ne pas classer l'image de taille '0' (100) dans la classe "ombres portées" si le score est inférieur à la valeur seuil de référence.

**Patentansprüche**

1. Verfahren zum Detektieren (300) von Schlagschatten, auf einem Bild mit Größe '0' (100), wobei das Verfahren Folgendes umfasst:

   - eine Lernphase, in deren Verlauf jedes Bild einer Reihe von Testbildern eine Linearunterscheidungsanalyse (LDA) erfährt, um die Eigenschaften der "Schlagschatten"-Klasse zu bestimmen, und auf Klassen "Schlagschatten" oder "ohne Schlagschatten" verteilt wird,
   - einen Aufnahmeschritt (302), in dem eine Erfassungsvorrichtung (402) das Bild mit Größe '0' (100) des Gesichts einer Person aufnimmt und eventuell neu dimensioniert, damit das Bild mit Größe '0' eine Auflösung von n × n besitzt, wobei n = $2^N$ ist und wobei N eine natürliche Zahl größer oder gleich 2 ist,
   - wenn 'p' von 0 bis N - 1 variiert:
   - einen Zerlegeschritt (304), in dem das Bild mit Größe 'p' (100, 200) in $n_p \times n_p$ Pixel zerlegt wird, wobei $n_p = 2^{(N-p)}$ ist,
   - einen ersten Normierungsschritt (306) für das Bild mit Größe 'p' (100, 200), in dem der Wert $X_{ij}^p$ jedes Pixel des Bildes mit Größe 'p' (100, 200) in Form eines Wertes

   $$x_{ij}^p = \frac{X_{ij}^p}{\sqrt{\sum_{i=1}^{n} \sum_{j=1}^{n} \left(X_{ij}^p\right)^2}}$$

   normiert wird,
   - einen Berechnungsschritt (308), in dem die Varianz $\sigma_p$ des Bildes mit Größe 'p' berechnet wird,
   - einen Reduzierungsschritt (310), in dem die Auflösung des Bildes mit Größe 'p' um einen Faktor 2 in ein Bild mit Größe 'p+1' reduziert wird, wobei die Werte $X_{ij}^{p+1}$ der Pixel des Bildes mit Größe 'p + 1' (200) in Bezug auf die normierten Werte $x_{ij}^p$ der Pixel des Bildes mit Größe 'p' berechnet werden,
   - einen Inkrementierungsschritt (312), in dem der Index 'p' um 1 inkrementiert wird,
   - einen Testschritt (313), in dem der Wert des Indexes 'p' mit N verglichen wird,
   - falls das Ergebnis des Testschrittes negativ ist, einen Schleifenbildungsschritt (314), in dem das Detektionsverfahren zu dem Ausschneideschritt (304) zurückgeschleift wird,
   - einen zweiten Normierungsschritt (316), in dem die Varianz $\sigma_p$ jedes reduzierten Bildes mit Größe 'p', wobei p von 1 bis N - 1 variiert, durch die Varianz □ $\sigma_0$ des Bildes mit Größe '0' dividiert wird,
   - einen Vektorisierungsschritt (318), in dem ein Eigenschaftsvektor anhand der Gesamtheit der somit normierten Varianzen $\sigma_1/\sigma_0$, $\sigma_2/\sigma_0$, ..., $\sigma_{N-1}/\sigma_0$ konstruiert wird,
   - einen Multiplikationsschritt (320), in dem das Skalarprodukt aus dem Eigenschaftsvektor und dem vorgegebenen und aus der LDA stammenden Eigenvektor berechnet wird,
   - einen Vergleichsschritt (322), in dem das somit berechnete Skalarprodukt mit einem Referenzschwellenwert verglichen wird und
   - einen Klassifizierungsschritt (324), in dem das Bild mit Größe '0' (100) in die "Schlagschatten"-Klasse klassifiziert wird, falls der erreichte Wert größer als der Referenzschwellenwert ist, und nicht in die Klasse "Schlagschatten"-Klasse klassifiziert wird, falls der erreichte Wert kleiner als der Referenzschwellenwert ist.

2. Detektionsverfahren (300) nach Anspruch 1, **dadurch gekennzeichnet, dass** der Wert $X_{ij}^{p+1}$ jedes Pixel eine Summe normierter Werte $x_{ij}^p$ von vier entsprechenden Pixeln des Bildes mit Größe 'p' ist und durch die folgende Formel gegeben ist:

   $$X_{ij}^{p+1} = \sum_{k=0}^{1} \sum_{l=0}^{1} x_{i+k,\,j+l}^p \quad (2).$$

3. Detektionsvorrichtung (400), die das Verfahren nach einem der Ansprüche 1 oder 2 ausführen kann, wobei die Detektionsvorrichtung (400) Folgendes umfasst:

- einen Lernmechanismus, der dazu vorgesehen ist, dass jedes Bild einer Reihe von Testbildern eine Linearunterscheidungsanalyse (LDA) erfährt, um die Eigenschaften der "Schlagschatten"-Klasse zu bestimmen, und auf Klassen "Schlagschatten" oder "ohne Schlagschatten" verteilt wird,
- eine Erfassungsvorrichtung (402), die dazu bestimmt ist, ein Bild mit Größe '0' (100) des Gesichts einer Person aufzunehmen und eventuell neu zu dimensionieren, damit das Bild mit Größe '0' eine Auflösung von $n \times n$ aufweist, wobei $n = 2^N$ ist und wobei N eine natürliche Zahl größer oder gleich 2 ist,
- Zerlegungsmittel (404), die dazu bestimmt sind, ein Bild mit Größe 'p' (100, 200) in $n_p \times n_p$ Pixel zu zerlegen, wobei $n_p = 2^{(N-p)}$ ist,
- erste Normierungsmittel (406), die dazu bestimmt sind, den Wert $X_{ij}^p$ jedes Pixel des Bildes mit Größe 'p' (100, 200) in Form eines Wertes

$$x_{ij}^p = \frac{X_{ij}^p}{\sqrt{\sum\limits_{i=1}^{n}\sum\limits_{j=1}^{n}\left(X_{ij}^p\right)^2}}$$

zu normieren,
- Berechnungsmittel (408), die dazu bestimmt sind, die Varianz $\sigma_p$ des Bildes mit Größe 'p' zu berechnen,
- Reduzierungsmittel (410), die dazu bestimmt sind, ein Bild mit Größe 'p + 1' durch Reduzieren der Auflösung des Bildes mit Größe 'p' um einen Faktor 2 zu erzeugen, wobei die Werte $X_{ij}^{p+1}$ der Pixel des Bildes mit Größe 'p + 1' (200) in Bezug auf die normierten Werte $x_{ij}^p$ der Pixel des Bildes mit Größe 'p' berechnet werden,
- Inkrementierungsmittel (412), die dazu bestimmt sind, den Index 'p' um 1 zu inkrementieren,
- Testmittel (414), die dazu bestimmt sind, den Wert des Indexes 'p' in Bezug auf N zu testen,
- zweite Normierungsmittel (416), die dazu bestimmt sind, die Varianz $\sigma_p$ jedes reduzierten Bildes mit Größe 'p', wobei p von 1 bis N - 1 variiert, durch die Varianz $\sigma_0$ des Bildes mit Größe '0' zu dividieren,
- Vektorisierungsmittel (418), die dazu bestimmt sind, einen Eigenschaftsvektor anhand der Gesamtheit der normierten Varianten $\sigma_1/\sigma_0$, $\sigma_2/\sigma_0$, ..., $\sigma_{N-1}/\sigma_0$ zu konstruieren,
- Multiplikationsmittel (420), die dazu bestimmt sind, das Skalarprodukt aus dem Eigenschaftsvektor und dem vorgegebenen und aus der LDA stammenden Eigenvektor zu berechnen,
- Vergleichsmittel (422), die dazu bestimmt sind, das Skalarprodukt mit einem Referenzschwellenwert zu vergleichen, und
- Klassifizierungsmittel (424), die dazu bestimmt sind, das Bild mit Größe '0' (100) in die Klasse "Schlagschatten" zu klassifizieren, falls der erreichte Wert größer als der Referenzschwellenwert ist, und das Bild mit Größe '0' (100) nicht in die Klasse "Schlagschatten" zu klassifizieren, falls der erreichte Wert kleiner als der Referenzschwellenwert ist.

## Claims

1. Method (300) of detecting cast shadows on an image of size '0' (100), said method comprising:

- a learning phase in the course of which each image of a series of test images undergoes a linear discriminant analysis (LDA) in order to determine the characteristics of the "cast shadows" class and is distributed into "cast shadows" or "not cast shadows" classes,
- a capture step (302) in the course of which an acquisition device (402) captures and optionally redimensions the image of size '0' (100) of the face of an individual so that the image of size '0' exhibits a definition of n*n where $n = 2^N$ and where N is a natural integer greater than or equal to 2,
for 'p' varying from 0 to N-1
- a cutting step (304) in the course of which the image of size 'p' (100, 200) is cut into $n_P \ast n_p$ pixels where $n_p = 2^{(N-p)}$,

- a first step of normalization (306) of the image of size 'p' (100, 200), in the course of which the value $X_{ij}^p$ of each pixel of the image of size 'p' (100, 200) is normalized in the form of a value
$$x_{ij}^p = \frac{X_{ij}^p}{\sqrt{\sum_{i=1}^{n}\sum_{j=1}^{n}\left(X_{ij}^p\right)^2}}$$

- a computation step (308) in the course of which the variance $\sigma_p$ of the image of size 'p' is computed,
- a reduction step (310) in the course of which the resolution of the image of size 'p' is reduced by a factor of 2 into an image of size 'p+1', where the values $X_{ij}^{p+1}$ of the pixels of the image of size 'p+1' (200) are computed with respect to the normalized values $x_{ij}^p$ of the pixels of the image of size 'p',

- an incrementation step (312) in the course of which the index 'p' is incremented by 1,
- a test step (313) in the course of which the value of the index 'p' is compared with N,
- if the result of the test step is negative, a looping step (314) in the course of which the method of detection loops back to the cutting step (304),
- a second normalization step (316) in the course of which the variance $\sigma_p$ of each reduced image of size 'p' where p varies from 1 to N-1 is divided by the variance $\sigma_0$ of the image of size '0',
- a vectorization step (318), in the course of which a vector of characteristics is constructed on the basis of the set of variances thus normalized $\sigma_1/\sigma_0$, $\sigma_2/\sigma_0$, ..., $\sigma_{N-1}/\sigma_0$,
- a multiplication step (320) in the course of which is computed the scalar product of the vector of characteristics and of the predetermined eigenvector arising from the LDA,
- a comparison step (322) in the course of which the scalar product thus computed is compared with a reference threshold value, and
- a classification step (324) in the course of which the image of size '0' (100) is classed into the "cast shadows" class if the score is greater than the reference threshold value, and is not classed into the "cast shadows" class if the score is less than the reference threshold value.

2. Method of detection (300) according to Claim 1, **characterized in that** the value $X_{ij}^{p+1}$ of each pixel is a sum of the normalized values $x_{ij}^p$ of the four corresponding pixels of the image of size 'p' and given by the formula:

$$X_{ij}^{p+1} = \sum_{k=0}^{1}\sum_{l=0}^{1} x_{i+k,j+l}^p \ (2).$$

3. Detection device (400) suitable for implementing the method of one of Claims 1 or 2, said detection device (400) comprising:

- a learning mechanism designed so that each image of a series of test images undergoes a linear discriminant analysis (LDA) in order to determine the characteristics of the "cast shadows" class and is distributed into "cast shadows" or "not cast shadows" classes,
- an acquisition device (402) intended to capture and optionally to redimension an image of size '0' (100) of the face of an individual so that the image of size '0' exhibits a definition of n*n where $n = 2^N$ and where N is a natural integer greater than or equal to 2,
- cutting means (404) intended to cut an image of size 'p' (100, 200) into $n_p * n_p$ pixels where $n_p = 2^{(N-p)}$,

- first normalization means (406) intended to normalize the value $X_{ij}^p$ of each pixel of the image of size 'p' (100, 200) into the form of a value

$$x_{ij}^p = \frac{X_{ij}^p}{\sqrt{\sum_{i=1}^{n}\sum_{j=1}^{n}\left(X_{ij}^p\right)^2}}$$

- computation means (408) intended to compute the variance $\sigma_p$ of the image of size 'p',

- reduction means (410) intended to create an image of size 'p+1' by reduction of the resolution of the image of size 'p' by a factor of 2, where the values $X_{ij}^{p+1}$ of the pixels of the image of size 'p+1' (200) are computed with respect to the normalized values $X_{ij}^{p}$ of the pixels of the image of size 'p',

- incrementation means (412) intended to increment the index 'p' by 1,

- test means (414) intended to test the value of the index 'p' with respect to N,

- second normalization means (416) intended to divide the variance $\sigma_p$ of each reduced image of size 'p' where p varies from 1 to N-1 by the variance $\sigma_0$ of the image of size '0',

- vectorization means (418) intended to construct a vector of characteristics on the basis of the set of normalized variances $\sigma_1/\sigma_0$, $\sigma_2/\sigma_0$, ..., $\sigma_{N-1}/\sigma_0$,

- multiplication means (420) intended to compute the scalar product of the vector of characteristics and of the predetermined eigenvector arising from the LDA,

- comparison means (422) intended to compare the scalar product with a reference threshold value, and

- classification means (424) intended to class the image of size '0' (100) into the "cast shadows" class if the score is greater than the reference threshold value, and to not class the image of size '0' (100) into the "cast shadows" class if the score is less than the reference threshold value.

$x_{11}^0$ $x_{12}^0$

$x_{21}^0$

$x_{22}^0$

100

$x_{nn}^0$

Fig. 1

200

$x_{11}^1$

$x_{\frac{n}{2},\frac{n}{2}}^1$

Fig. 2

402 404 406 408 410 412

424 422 420 418 416 414

Fig. 4

400

Fig. 3